# EUROPÄISCHE PATENTSCHRIFT

(11) **EP 2 839 131 B1**
(45) Veröffentlichungstag und Bekanntmachung des Hinweises auf die Patenterteilung: **24.08.2016**
(21) Anmeldenummer: 13708805.0
(22) Anmeldetag: 11.03.2013
(51) Int. Cl.: F02B 29/04, F02B 33/22, F02B 41/06, F02B 69/06, F02B 9/02

(54) **MENGENGEREGELTE 4-TAKT-HUBKOLBEN-BRENNKRAFTMASCHINE UND VERFAHREN ZUM BETRIEB DER 4-TAKT-HUBKOLBEN-BRENNKRAFTMASCHINE**
VOLUME-CONTROLLED FOUR-STROKE RECIPROCATING INTERNAL COMBUSTION ENGINE AND METHOD FOR OPERATING THE FOUR-STROKE RECIPROCATING INTERNAL COMBUSTION ENGINE
MOTEUR À COMBUSTION INTERNE À PISTONS ALTERNATIFS À QUATRE TEMPS À CYLINDRÉE VARIABLE ET PROCÉDÉ DE FONCTIONNEMENT DU MOTEUR À COMBUSTION INTERNE À PISTONS ALTERNATIFS À QUATRE TEMPS

(30) Priorität: 18.04.2012 DE 102012206372
(43) Veröffentlichungstag der Anmeldung: 25.02.2015
(73) Patentinhaber: Bayerische Motoren Werke Aktiengesellschaft, 80809 München (DE)
(72) Erfinder: FISCHER, Hubert, 82291 Mammendorf (DE)
(86) Internationale Anmeldenummer: PCT/EP2013/054811
(87) Internationale Veröffentlichungsnummer: WO 2013/156202

(56) Entgegenhaltungen:
- GB-A- 2 469 939
- GB-A- 2 478 544
- US-A1- 2009 056 331
- US-A1- 2009 301 086
- US-A1- 2011 303 185
- US-B1- 6 318 310

## Beschreibung

Die Erfindung betrifft eine mengengeregelte 4-Takt-Hubkolben-Brennkraftmaschine mit den Merkmalen aus dem Patentanspruch 1 sowie Verfahren zum Betrieb der 4-Takt-Hubkolben-Brennkraftmaschine mit den Merkmalen aus den Patentansprüchen 8 bis 14.

Aus der US 6 318 310 B1, von der die vorliegende Erfindung ausgeht, ist eine 4-Takt-Hubkolben-Brennkraftmaschine mit einem ersten Zylinder, in dem ein erster, über ein erstes Pleuel mit einer Kurbelwelle in Wirkverbindung stehender Kolben hubbeweglich angeordnet ist und zumindest einem zweiten Zylinder; in dem ein zweiter, über ein zweites Pleuel mit der Kurbelwelle in Wirkverbindung stehender Kolben hubbeweglich angeordnet ist und mit einem Frischlufttrakt für den zweiten Zylinder, in dem in Strömungsrichtung einer Frischluft vor einem Gaswechseleinlassventil des zweiten Zylinders eine Expansions-/Kompressionsmaschine angeordnet ist und mit einem Abgasstrakt für den zweiten Zylinder, wobei die Expansions-/Kompressionsmaschine der erste Zylinder ist, bekannt.

Zum technischen Umfeld wird beispielsweise auf die Übersetzung der europäischen Patentschrift EP 696 00 937 T2 hingewiesen, aus der eine Verstellung der Nockenwellenphase für eine Zylinderabschaltung einer Hubkolben-Brennkraftmaschine bekannt ist. Aus dieser Patentschrift ist eine mehr-zylindrige 4-Takt-Hubkolben-Brennkraftmaschine mit einer Kurbelwelle und mehreren, in mehreren Zylindern hin- und hergehend gelagerten Kolben bekannt. Weiter weist jeder Zylinder der Brennkraftmaschine wenigstens ein Einlass- und ein Auslassventil sowie eine Nockenwelle auf zur Betätigung wenigstens der Auslassventile. Diese Brennkraftmaschine ist dadurch gekennzeichnet, dass sie außerdem weitere folgende Merkmale aufweist:
❖ Einen Phasensteuermechanismus zur Einstellung der Steuerzeiten der Nockenwelle in Bezug auf die Drehstellung der Kurbelwelle;
❖ mehrere Einlassdrosseln, wobei eine der Drosseln in der Nähe und stromoberhalb eines jeden der Einlassventile angeordnet ist;
❖ eine mit den Einlassdrosseln und dem Phasensteuermechanismus für die Nockenwelle verbundene Steuerung zur Abschaltung wenigstens einiger der Zylinder durch Betätigen des Phasensteuermechanismus und der Einlassdrosseln derart, dass für jeden abzuschaltenden Zylinder die Einlassdrossel geschlossen und die Nockenwellensteuerung derart eingestellt wird, dass die Position mit dem größten Auslassventilhub von etwa 90° vor dem oberen Totpunkt im Auspuffhub auf einen Punkt verschoben wird, bei dem der größte Ventilhub entweder ungefähr im oberen Totpunkt des Auspuffhubes auftritt oder ungefähr im unteren Totpunkt des Expansionshubes.

Aus der DE 10 2011 006 388.9 sind ein Verfahren zum Betrieb einer mengengeregelten Brennkraftmaschine sowie eine dafür vorgesehene Brennkraftmaschine bekannt sind. Die Brennkraftmaschine weist zumindest zwei Zylinder, sowie einen Ansaugtrakt und einen Abgasstrang auf. In dem Ansaugtrakt ist in Strömungsrichtung der Frischluft vor einem Einlassventil der Brennkraftmaschine eine Expansions-/Kompressionsmaschine angeordnet, deren Abtriebswelle mit einer Abtriebswelle der Brennkraftmaschine und/oder mit einer Antriebswelle einer elektrischen Maschine koppelbar ist. Weiter ist ein an den Abgasstrang angeordneter Wärmetauscher vorgesehen. Das Verfahren ist dadurch gekennzeichnet, dass die Frischluft, bevor sie in die Expansions-/Kompressionsmaschine strömt, im Wärmetauscher vom Abgas der Brennkraftmaschine aufgeheizt wird. Durch das Betriebsverfahren für die mengengeregelte Brennkraftmaschine wird der Wirkungsgrad der Brennkraftmaschine wesentlich verbessert.

In der o. g. Patentanmeldung ist ausgeführt, dass durch die Nutzung des Expansionsprozesses nicht nur die Ladungswechselverluste vermieden, sondern in Verbindung mit dem erfindungsgemäßen Abgaswärmetauscher deutliche Wirkungsgradvorteile und damit Kraftstoffverbrauchsvorteile erzielt werden. Weiter lässt sich diese Technologie besonders gut mit einer Abgasturboaufladung verbinden. Daher wird in dieser Patentanmeldung auch von der effizienten Laststeuerung (ELS) einer mengengeregelten Brennkraftmaschine gesprochen.

Ähnlich wie durch einen mechanisch oder elektrisch angetriebenen Kompressor im Ansaugtrakt die Leistung der Brennkraftmaschine durch Verdichtung der Frischluft erhöht werden kann, kann durch eine Expansionsmaschine, die gleichzeitig auch als Kompressionsmaschine ausgeführt sein kann, anstelle der Drosselklappe die Frischluft "verdünnt", d. h. auf eine geringere Dichte eingestellt und damit die Leistung der Brennkraftmaschine reduziert werden. Dadurch werden Drosselverluste einer üblichen Drosselklappe praktisch vollständig vermieden. Der Wirkungsgradvorteil ist mit einer variablen Ventilsteuerung vergleichbar, wie sie beispielsweise von der Bayerische Motoren Werke AG unter dem Namen "Valvetronic" bereits seit über einem Jahrzehnt erfolgreich in der Großserie eingesetzt wird. Die Arbeit, die in der Expansionsmaschine verrichtet wird, kann dabei über eine mechanische Ankopplung (z. B. Riementrieb) der Brennkraftmaschine bzw. deren Kurbelwelle oder einem elektrischen Generator zugeführt werden.

Wie in der o. g. Patentanmeldung weiter ausgeführt ist, lassen sich weitere Wirkungsgradsteigerungen in der Teillast der Brennkraftmaschine erreichen, wenn über den Wärmetauscher am Abgasstrang Wärmeenergie auf die Frischluft übertragen wird. Dadurch wird der Volumenstrom der Frischluft erhöht und dazu proportional die Arbeit, die in der Expansions-/Kompressionsmaschine verrichtet wird. Nach der Expansions-/Kompressionsmaschine wird die Frischluft durch einen Kühler, z. B. einen Ladeluftkühler, wieder auf eine übliche Frischlufttemperatur gekühlt, bevor sie der Brennkraftmaschine zur Verbrennung zugeführt wird. Somit können Wirkungsgrade im Teillastbereich einer mengengeregelten Brennkraftmaschine erreicht werden, die sogar deutlich über dem eines hub- und/oder zeitvariablen Ventiltriebes liegen. Dies entspricht soweit dem bekannten Stand der Technik.

Nachteilig an diesem Stand der Technik ist die Verwendung einer separaten Expansions-/Kompressionsmaschine, die Bauraum benötigt und Herstellkosten verursacht sowie eine kostenintensive Kupplung zur Energieeinspeisung benötigt.

Aufgabe der vorliegenden Erfindung ist es, eine gattungsgemäße mengengeregelte 4-Takt-Hubkolben-Brennkraftmaschine aufzuzeigen, die auf eine separate Expansions-/Kompressionsmaschine verzichtet, sowie geeignete Betriebsverfahren für diese 4-Takt-Hubkolben-Brennkraftmaschine.

Diese Aufgabe wird vorrichtungsmäßig durch das Merkmal im kennzeichnenden Teil des Patentanspruchs 1 und verfahrensmäßig durch die Merkmale der Patentansprüche 8 bis 14 gelöst.

### Definitionen

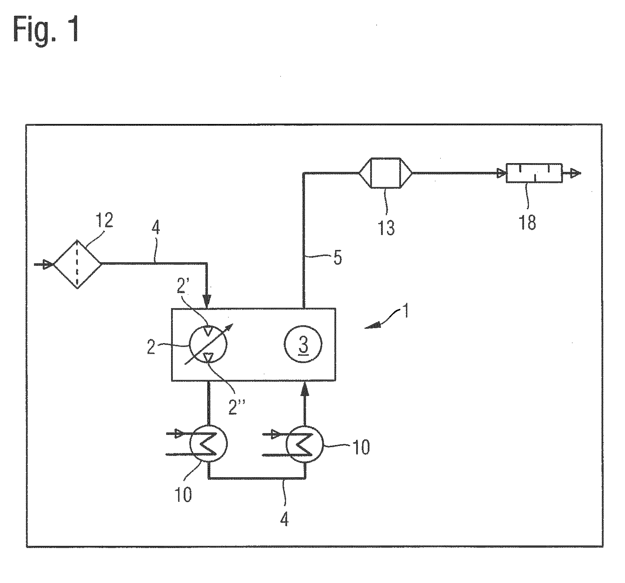

### 1. VLS: Volumetrische Laststeuerung (Figur 1):

Erfindungsgemäß handelt es sich um eine interne VLS, ohne separate Expansions-/Kompressionsmaschine.

Der zweite Zylinder wird konventionell im mengengeregelten 4-Takt-verfahren betreiben. Durch die variablen Steuerzeiten der Gaswechselventile kann der erste Zylinder als Expansionsmaschine oder als Kompressionsmaschine betrieben werden. Als Kompressionsmaschine wird der erste Zylinder im 2-Takt-Verfahren betrieben. Die für einen Lastpunkt des zweiten Zylinders benötigte Frischluftmenge wird über den ersten Zylinder, oder auch VLS-Zylinder genannt, gesteuert. Im Teillastbetrieb können dadurch die Ladungswechselverluste, analog einem hub- und/oder zeitvariablen Ventiltrieb, kompensiert werden.

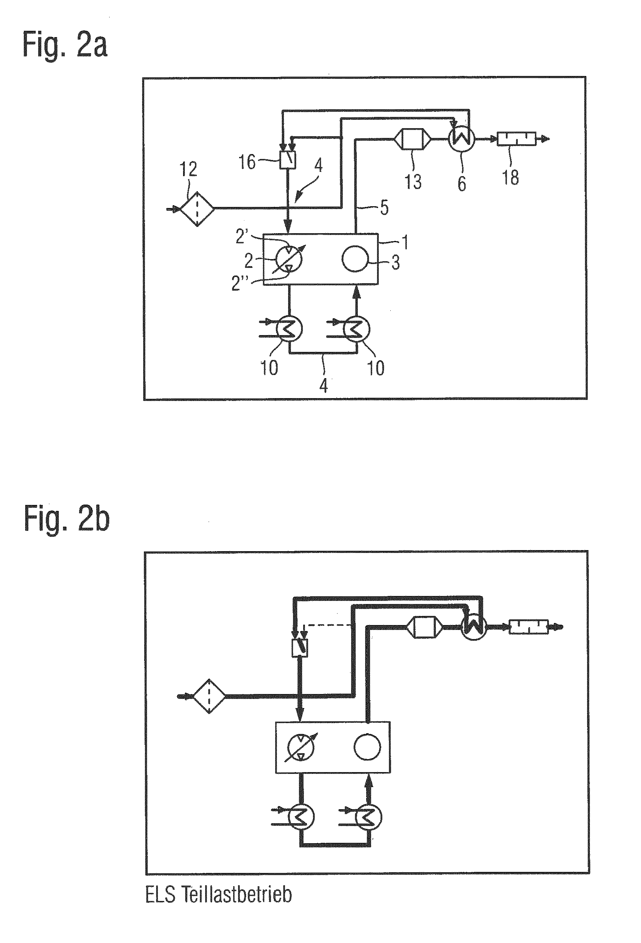

### 2. ELS: Effiziente Laststeuerung (Figuren 2a bis 2c):

Hierbei handelt es sich um eine Kombination des erfindungsgemäßen, internen VLS-Verfahrens mit Abgaswärmenutzung.

In der Teillast der Brennkraftmaschine wird die Frischluft vor der Expansion in dem ersten Zylinder, bzw. VLS-Zylinder über den Abgaswärmetauscher erhitzt. Dadurch wird die gewonnene Expansionsarbeit vergrößert und der Gesamtwirkungsgrad verbessert.

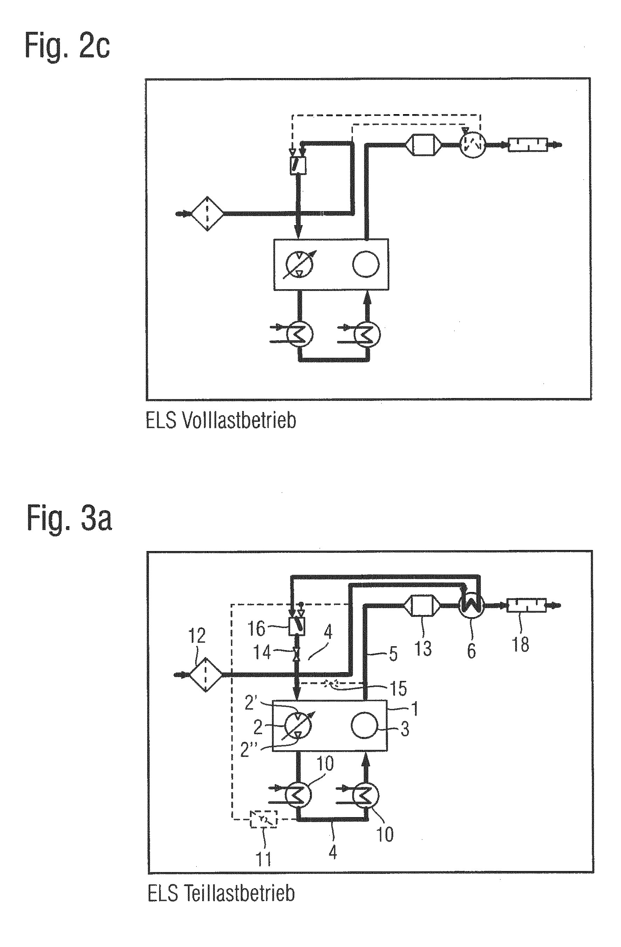

### 3. ELS mit Vollmotoroption: Effiziente Laststeuerung mit Vollmotoroption (Figuren 3a bis 3c):

Bei der ELS mit Vollmotoroption kann der erste Zylinder oder VLS Zylinder durch eine geeignete und bekannte Variabilität in der Gaswechselventilsteuerung vom 2-Takt-VLS Betrieb in den 4-Takt-Verbrennungsmodus umgeschaltet werden. Durch Umschalten der Frischluft- und Abgasführung für den ersten Zylinder oder VLS-Zylinder ist ein Vollmotorbetrieb möglich. Vollmotorbetrieb bedeutet, dass alle Zylinder der Brennkraftmaschine befeuert betrieben werden.

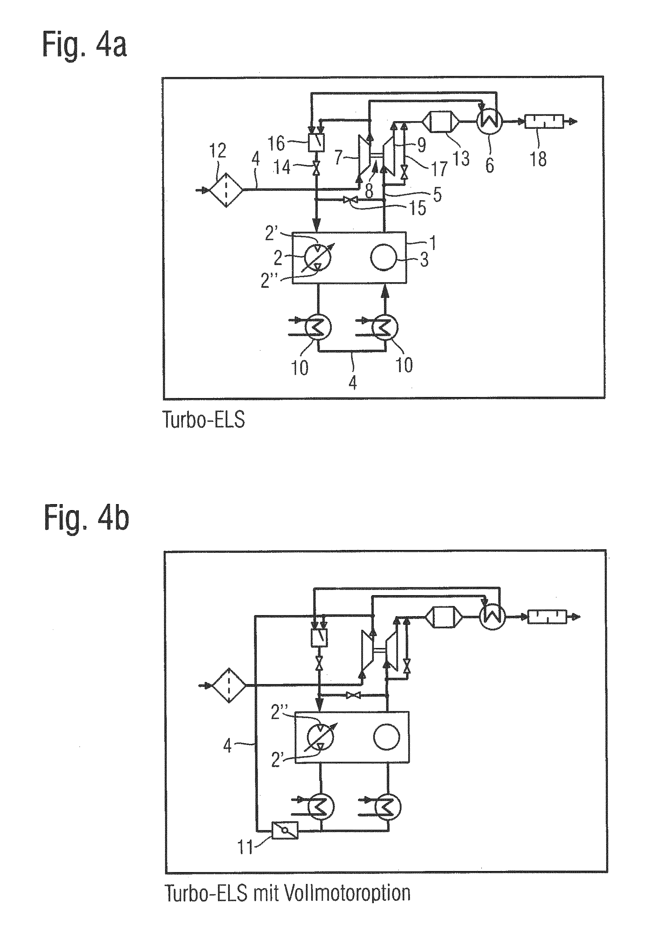

### 4. Auflade-ELS Laststeuerung: Effiziente Laststeuerung mit Vollmotoroption und Aufladung (Figuren 4a und 4b):

Die ELS Laststeuerung lässt sich sehr gut mit einer Aufladung (mechanische Aufladung oder Abgasturboaufladung) kombinieren. Dadurch kann zusätzlich der Druck vor dem ersten Zylinder, dem VLS-Zylinder, angehoben werden und der Bereich der Wirkungsgradverbesserung durch Abgasenergienutzung zu höheren Lasten der Brennkraftmaschine hin erweitert werden. Durch Umschalten der Frischluft- und Abgasführung für den ersten Zylinder oder VLS-Zylinder ist auch mit der Auflade-ELS Laststeuerung ein Vollmotorbetrieb möglich.

Durch die erfindungsgemäße Ausgestaltung sind somit ein brennkraftmaschineninternes VLS- und ELS-Verfahren dargestellt. Das interne VLS-Verfahren und das ELS-Verfahren sind somit Erweiterungen des einfachen Prinzips der Zylinderabschaltung, wie es für Brennkraftmaschinen mit größerer Zylinderanzahl zur Verbesserung des Teillastverbrauches bekannt ist. Nachfolgend werden mögliche Realisierungen, wie sie in den Fig. 1 bis 6 in Verbindung mit Tabelle 1 dargestellt sind, erläutert. Besonders gut eignen sich für das VLS- und ELS-Verfahren auch 4-Takt-Brennkraftmaschinen der V-Bauart, bei denen eine bankweise Zylinderabschaltung erfolgen kann.

### Erläuterung zur Zylinderabschaltung:

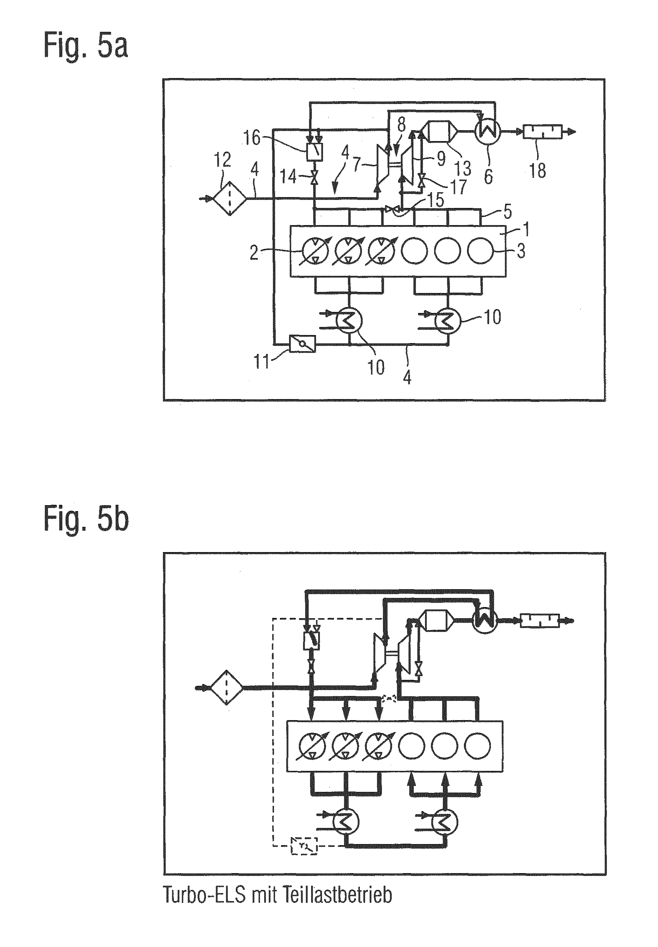

Bei einer mengengeregelten Laststeuerung lässt sich in der Teillast ein Verbrauchsvorteil erzielen, indem ein Teil der Zylinder zur Minimierung der Verlustleistung in diesen Zylindern deaktiviert wird und die restlichen Zylinder in einem höheren Lastzustand bei geringeren Ladungswechselverlusten betrieben werden. Typischerweise werden die abzuschaltenden Zylinder derart abgeschaltet, dass die befeuerten Zylinder einen gleichmäßigen Zündabstand haben, so dass eine möglichst hohe Laufruhe erzielt wird. Für die übliche Zündfolge einer 6-Zylinder-Brennkraftmaschine ergibt sich damit die Abschaltung einer Dreiergruppe von Zylindern, in dem in den Fig. 5a bis d gewählten Beispiel die mit 2 bezifferte Zylindergruppe. Die Abschaltung der Zylinder geschieht typischerweise derart, dass die Kraftstoffeinspritzung für diese Zylinder abgestellt und der Ventilhub durch eine geeignete Vorrichtung, wie aus dem Stand der Technik bekannt, deaktiviert wird und die Gaswechselventile geschlossen bleiben.

### Erfindungsgemäßes VLS- und ELS-Verfahren:

Der internen Realisierung des VLS- und ELS-Verfahrens liegt die erfindungsgemäße Idee zugrunde, die bei der Zylinderabschaltung deaktivierten Zylinder für den Expansionsprozess oder auch einen Kompressionsprozess der Frischluft zu nutzen (Volumetrische Laststeuerung). Fig. 5a bis 5d zeigen beispielsweise eine Realisierungsmöglichkeit, bei der sowohl das ELS-Verfahren im Dreizylinderbetrieb als auch der Vollmotorbetrieb mit allen Zylindern möglich ist. Eine genauere Funktionsbeschreibung erfolgt in der Figurenbeschreibung.

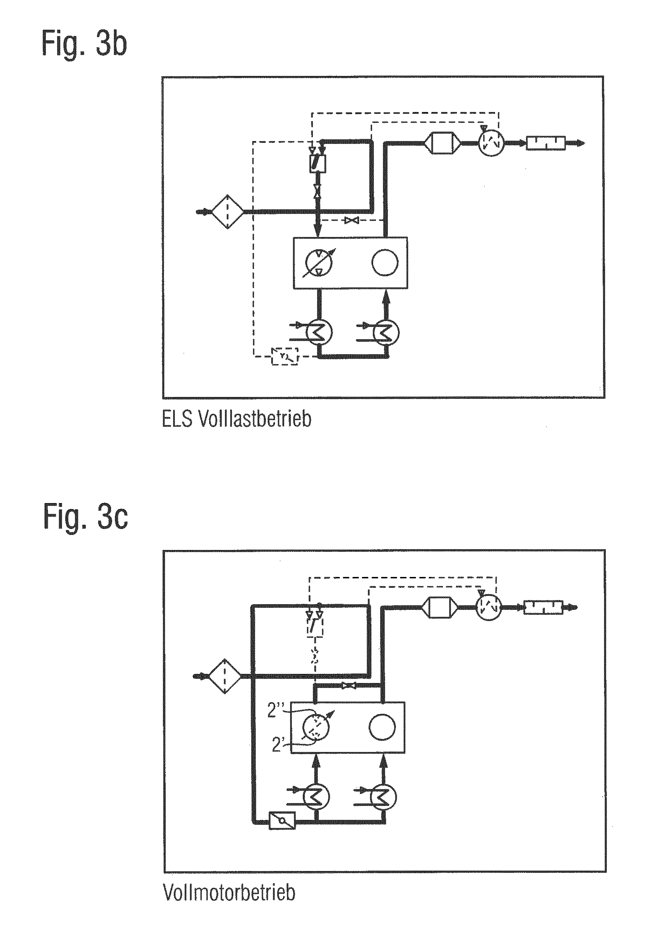

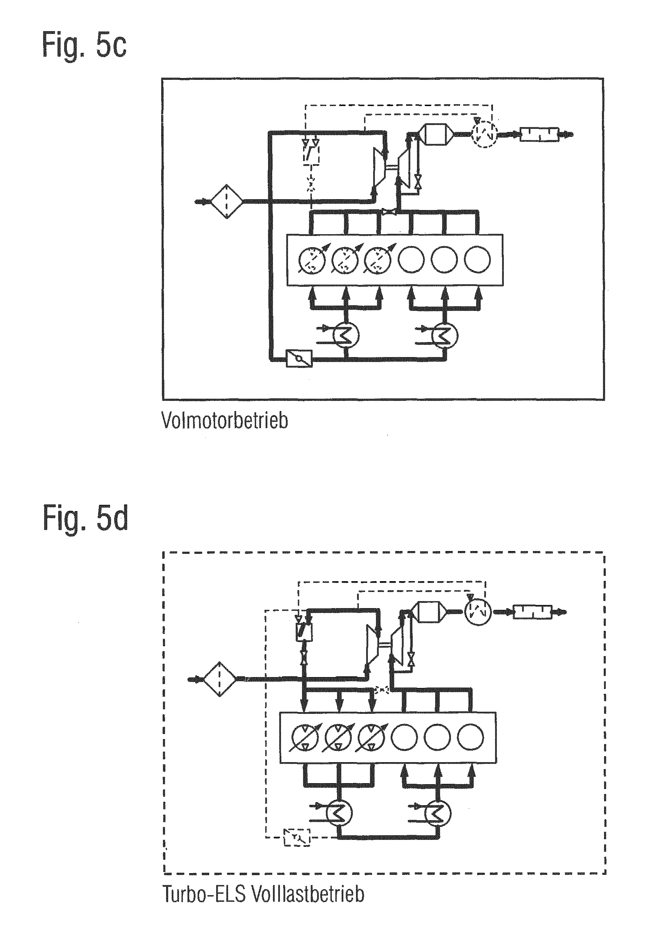

So zeigt Fig. 1 die Gasführung für den VLS-Betrieb einer 2-Zylinder-Brennkraftmaschine (Volumetrische Laststeuerung). Damit der unbefeuerte Zylinder im VLS-Verfahren verwendet werden kann, wird er bevorzugt im 2-Takt-Verfahren betrieben, d. h. Ein- und Auslassgaswechselventile öffnen in jedem Arbeitstakt. Durch den 2-Takt Betrieb verdoppelt sich das Arbeitsvolumen gegenüber dem befeuerten Zylinder. Eine besonders vorteilhafte Konfiguration erhält man, wenn man die Durchströmungsrichtung in dem VLS-Zylinder umkehrt (Fig. 3a, 5b), d. h. von der Auslassseite zur Einlassseite durchströmt und den Ladeluftkühler (bzw. Frischluftkühler) zweigeteilt ausführt. Um eine Umschaltbarkeit zwischen VLS- und Vollmotorbetrieb zu realisieren, müssen im VLS-Betrieb der VLS-Zylinder (Fig. 3c) bzw. die VLS-Zylindergruppe (Fig. 5c) durch ein Stellelement vom Abgasstrang des befeuerten Zylinders oder der befeuerten Zylinder getrennt und die Drosselklappe geschlossen werden. Für den Vollmotorbetrieb muss der Ventiltrieb in den VLS-Zylindern auf Normalbetrieb, d. h. 4-Takt-Betrieb, umgeschaltet werden, die Abgasklappe und die Drosselklappe geöffnet und die im VLS Luftpfad befindliche Klappe geschlossen werden.

Der größte Wirkungsgradvorteil kann erreicht werden, wenn der Ventiltrieb in den VLS-Zylindern variabel ausgeführt wird, damit optimale Expansionsverhältnisse eingestellt werden können. Dann ist ein aufgeladener 3-Zylinder-ELS-Betrieb (Fig. 5b) möglich, wobei die VLS-Zylinder für einen noch höheren Aufladegrad, bzw. zur Responseverbesserung verwendet werden können.

### Zusammengefasst kann gesagt werden:

Durch den Expansionsprozess im Ansaugweg einer mengengeregelten Brennkraftmaschine in Verbindung mit einem vorgeschalteten Abgaswärmetauscher (ELS-Verfahren) und einem nachgeschalteten Frischluftkühler lassen sich deutliche Wirkungsgradverbesserungen und damit Kraftstoffverbrauchsvorteile erzielen. Die erfindungsgemäßen Verfahren lassen sich in vorteilhafter Weise brennkraftmaschinenintern realisieren. Kann die Expansionsmaschine auch als Kompressionsmaschine betrieben werden, ergibt sich ein allgemeines Laststeuerverfahren, das einen großen Lastbereich der Brennkraftmaschine bei hervorragendem Teillastkraftstoffverbrauch ermöglicht. In Verbindung mit einer Aufladung wie z. B. einer Abgasturboaufladung (Turbo-ELS-Verfahren) lässt sich der Kraftstoffverbrauchsvorteil zu höheren Lasten der Brennkraftmaschine hin nochmals erweitern und bei einer zusätzlichen Kompressorfunktion das Ansprechverhalten der Brennkraftmaschine (Response) verbessern.

Im Folgenden ist die Erfindung anhand von fünf Ausführungsbeispielen in 14 Figuren und einer Tabelle näher erläutert.
- Fig. 1: zeigt schematisch eine erfindungsgemäße interne volumetrische Laststeuerung (VLS-Betrieb) für eine 2-Zylinder-Brennkraftmaschine.
- Fig. 2a: zeigt schematisch einen Grundaufbau für eine effiziente Laststeuerung (ELS-Betrieb) für eine 2-Zylinder-Brennkraftmaschine.
- Fig. 2b: zeigt schematisch eine effiziente Laststeuerung für die 2-Zylinder-Brennkraftmaschine aus Fig. 2a in einem ELS-Teillastbetrieb.
- Fig. 2c: zeigt schematisch eine Laststeuerung für die 2-Zylinder-Brennkraftmaschine aus Fig. 2a in einem Volllastbetrieb.
- Fig. 3a: zeigt schematisch einen Grundaufbau für eine effiziente Laststeuerung mit Vollmotoroption für eine 2-Zylinder-Brennkraftmaschine in einem ELS-Teillastbetrieb.
- Fig. 3b: zeigt schematisch eine Laststeuerung für die 2-Zylinder-Brennkraftmaschine aus Fig. 3a in einem Volllastbetrieb.
- Fig. 3c: zeigt schematisch eine Laststeuerung für die 2-Zylinder-Brennkraftmaschine aus Fig. 3a in einem Vollmotorbetrieb.
- Fig. 4a: zeigt schematisch einen Grundaufbau für eine effiziente Laststeuerung mit Aufladung für eine 2-Zylinder-Brennkraftmaschine.
- Fig. 4b: zeigt schematisch einen Grundaufbau für eine effiziente Laststeuerung mit Aufladung und Vollmotoroption für die 2-Zylinder-Brennkraftmaschine aus Fig. 4a.
- Fig. 5a: zeigt schematisch einen Grundaufbau für eine effiziente Laststeuerung mit Aufladung und Vollmotoroption für eine 6-Zylinder-Brennkraftmaschine.
- Fig. 5b: zeigt schematisch eine effiziente Laststeuerung mit Aufladung für die 6-Zylinder-Brennkraftmaschine aus Fig. 5a in einem Teillastbetrieb.
- Fig. 5c: zeigt schematisch eine Laststeuerung für die 6-Zylinder-Brennkraftmaschine aus Fig. 5a in einem Vollmotorbetrieb.
- Fig. 5d: zeigt schematisch eine Laststeuerung für die 6-Zylinder-Brennkraftmaschine aus Fig. 5a in einem Volllastbetrieb.
- Fig. 6: zeigt schematisch einen Grundaufbau für eine effiziente Laststeuerung mit Aufladung und Vollmotoroption für eine 2-Zylinder-Brennkraftmaschine (entspricht Fig. 4b).
- Tabelle 1: zeigt mögliche Betriebsmodi für die 2-Zylinder-Brennkraftmaschine aus Fig. 6.

Im Folgenden gelten in den Fig. 1 bis 6 und Tabelle 1 für gleiche Bauelemente die gleichen Bezugsziffern.

In Fig. 1 ist eine erfindungsgemäße, interne volumetrische Laststeuerung (VLS-Betrieb) für eine 2-Zylinder-Brennkraftmaschine dargestellt.

In den Fig. 2a, 3a, 4a und 5a und 6 ist jeweils ein Grundaufbau für eine Hubkolben-Brennkraftmaschine mit einer effizienten Laststeuerung (ELS-Betrieb) dargestellt.

Für eine bessere Übersichtlichkeit sind nur die Fig. 2a, 3a, 4a und 5a voll beziffert. Lediglich Abweichungen von dieser Bezifferung sind in den restlichen Figuren separat beziffert. Aktive Leitungsführungen sind mit einer durchgezogenen Linie und inaktive Leitungsführungen sind gestrichelt dargestellt. Eine Strömungsrichtung eines (Ab-)Gases ist durch kleine Pfeilspitzen angedeutet.

Fig. 1 zeigt schematisch eine erfindungsgemäße mengengeregelte 4-Takt-Hubkolben-Brennkraftmaschine 1 mit einem ersten und einem zweiten Zylinder 2, 3 für einen VLS-Betrieb (volumetrische Laststeuerung). Der erste Zylinder 2, auch VLS-Zylinder genannt, weist eine Gaswechsel-Einlassseite 2' und eine Gaswechsel-Auslassseite 2" auf, in denen jeweils zumindest ein Gaswechselventil angeordnet ist. Dies ist symbolisch durch ein einlassseitiges und ein auslassseitiges Dreieck dargestellt. Eine variable Luftverdünnung oder Luftverdichtung (Expansion oder Kompression) durch den ersten Zylinder 2 ist symbolisch durch einen Pfeil dargestellt. Die Gaswechselventile weisen bevorzugt einen hub- und/oder zeitvariablen Ventiltrieb auf und sind von einem 4-Takt-Betrieb in einen 2-Takt-Betrieb und umgekehrt umschaltbar.

In dem ersten Zylinder 2 ist ein erster, über ein erstes nicht dargestelltes Pleuel mit einer ebenfalls nicht dargestellten Kurbelwelle in Wirkverbindung stehender, nicht dargestellter Kolben hubbeweglich angeordnet. In dem zweiten Zylinder 3 ist ein zweiter, über ein zweites nicht dargestelltes Pleuel mit der Kurbelwelle in Wirkverbindung stehender, nicht dargestellter Kolben hubbeweglich angeordnet.

Beim Betrieb der Brennkraftmaschine 1 wird Frischluft durch einen Ansauggeräuschdämpfer 12 zum ersten Zylinder 2 gefördert, von dort weiter durch zwei Ladeluftkühler 10 in den zweiten Zylinder 3. Im zweiten Zylinder 3 wird die Frischluft mit Kraftstoff verbrannt, die Abgase werden anschließend in einen Abgastrakt 5 ausgeschoben, in einer Abgasreinigungsanlage 13 von Schadstoffen gereinigt und durch einen Schalldämpfer 18 in eine Umgebung ausgeblasen.

Erfindungsgemäß arbeitet der erste Zylinder 2 als eine Expansions-/Kompressionsmaschine, d. h. die Frischluft ist vom ersten Zylinder 2 expandierbar oder komprimierbar. Wird der Zylinder 2 als Kompressionsmaschine betrieben, werden die Gaswechselventile bevorzugt im 2-Takt-Betrieb betreiben.

Durch diese Expansion bzw. Kompression wird die Frischluft auf eine Dichte eingestellt, die von dem zweiten Zylinder 3 für eine gerade geforderte Last, bzw. Leistung der Brennkraftmaschine 1 benötigt wird. Wie bereits erwähnt ist in Fig. 1 der grundsätzliche Aufbau für die erfindungsgemäße, interne volumetrische Laststeuerung (VLS-Betrieb) für eine 2-Zylinder-Brennkraftmaschine dargestellt.

Mit der in Fig. 1 dargestellten Hubkolben-Brennkraftmaschine 1 ist nun ein Verfahren zum Betrieb der Hubkolben-Brennkraftmaschine möglich, der durch folgende Verfahrensschritte bei kleiner bis mittlerer angeforderter Last und/oder Leistung gekennzeichnet ist:
- Befeuertes Betreiben des zweiten Zylinders 3,
- Abführen des Abgases des zweiten Zylinders 3 im Abgastrakt 5,
- Ansaugen einer Frischluft mit dem ersten Zylinder 2,
- Expandieren der Frischluft,
- Zuführen der expandierten Frischluft dem zweiten Zylinder 3.

Das zu Fig. 1 ausgeführte gilt auch für alle weiteren Figuren 2 bis 6, in denen vorteilhafte Weiterbildungen der Erfindung dargestellt sind.

Fig. 2a zeigt schematisch einen Grundaufbau für eine effiziente Laststeuerung (ELS-Betrieb) für eine 2-Zylinder-Brennkraftmaschine 1. Gegenüber der 2-Zylinder-Brennkraftmaschine in Fig. 1 weist die 2-Zylinder-Brennkraftmaschine 1 in Fig. 2a einen zusätzlichen Wärmetauscher 6 im Abgastrakt 5 und einen Frischlufttemperaturregler 16 im Frischlufttrakt 4 auf. Die Frischluftführung zum ersten Zylinder 2 kann nun auf zwei Wegen erfolgen:
1. Vom Ansauggeräuschdämpfer 12 kommend durch den Wärmetauscher 6 und weiter zum Frischlufttemperaturregler 16 und/oder
2. nach dem Ansauggeräuschdämpfer 12 und vor dem Wärmetauscher 6 direkt in den Frischlufttemperaturregler 16.

Im Frischlufttemperaturregler 16 ist zumindest ein Verschlussorgan, beispielsweise eine Klappe, vorgesehen, die die beiden Lufteingänge wechselweise verschließen oder öffnen kann, so dass in dem Frischlufttemperaturregler 16 eine beliebige Temperatur für die Frischluft eingestellt werden kann, die zwischen der Umgebungslufttemperatur und der vom Wärmetauscher 6 maximal aufgeheizten Frischlufttemperatur liegen kann.

Fig. 2b zeigt schematisch die effiziente Laststeuerung für die 2-Zylinder-Brennkraftmaschine aus Fig. 2a für einen ELS-Teillastbetrieb. Wie Fig. 2b zu entnehmen ist, ist in einer Teillast der Brennkraftmaschine 1 der direkte Frischluftpfad nach dem Ansauggeräuschdämpfer 12 und vor dem Wärmetauscher 6 deaktiviert, dargestellt durch eine gestrichelte Linie. Dies bedeutet beim ELS-Teillastbetrieb wird vorwiegend oder ausschließlich vom Wärmetauscher 6 vorgewärmte Frischluft verwendet. Die durch die Expansion im ersten Zylinder 2 gewonnene Energie wird hierbei direkt vom ersten Kolben und dem ersten Pleuel auf die Kurbelwelle übertragen und der von dem zweiten Zylinder 3 erzeugten Bewegungsenergie überlagert.

Fig. 2c zeigt schematisch eine effiziente Laststeuerung für die 2-Zylinder-Brennkraftmaschine aus Fig. 2a für einen ELS-Vollastbetrieb. Im Gegensatz zu Fig. 2b ist nun der Frischluftpfad durch den Wärmetauscher 6 deaktiviert, wiederum gestrichelt dargestellt. Dies bedeutet, dass beim ELS-Vollastbetrieb der zweite Zylinder mit vom ersten Zylinder 2 komprimierter und vom Ladeluftkühler 10 abgekühlter Frischluft gefüllt wird.

Mit den in den Fig. 2a bis 2c dargestellten Hubkolben-Brennkraftmaschinen 1 kann nun ein zusätzlicher Verfahrensschritt durchgeführt werden:
- Aufheizen der Frischluft in dem Wärmetauscher 6 bevor die Frischluft dem ersten Zylinder 2 zugeführt wird.

Fig. 3a zeigt schematisch einen Grundaufbau für die effiziente Laststeuerung mit einer Vollmotoroption für die 2-Zylinder-Brennkraftmaschine 1 aus der Fig. 2a in einem ELS-Teillastbetrieb. Die Brennkraftmaschine 1 in Fig. 3a unterscheidet sich für die Vollmotoroption von der Brennkraftmaschine 1 in Fig. 2a dadurch, dass:
- die Gaswechseleinlassseite 2' und die Gaswechselauslassseite 2" des ersten Zylinders vertauschbar sind und
- der Frischlufttrakt 4 zwischen dem Ansaugtemperaturregler 16 und der Gaswechselauslassseite 2" mit einem zweiten Stellelement 14 trennbar ist und
- der Frischlufttrakt 4 über ein erstes Stellelement 11 mit der Gaswechseleinlassseite des ersten und zweiten Zylinders 2, 3 verbindbar ist und
- die Gaswechselauslassseite 2" des ersten Zylinders über ein drittes Stellelement 15 mit dem Abgastrakt 5 vor dem Wärmetauscher 6 verbindbar ist und
- der erste Zylinder 2 in einem 4-Takt-Betrieb betreibbar ist.

Wie in Fig. 3a erkennbar ist, ist im ELS-Teillastbetrieb der direkte Pfad der Frischluft im Frischlufttrakt 4 nach dem Ansauggeräuschdämpfer 12 und vor dem Wärmetauscher 6 über das erste Stellelement 11, beispielsweise einer Drosselklappe, zum Frischlufttrakt 4 vor dem zweiten Zylinder deaktiviert, gestrichelt dargestellt. Das zweite Stellelement 14 ist geöffnet und das dritte Stellelement 15 ist geschlossen. Somit entspricht dieser Betriebsmodus, der ELS-Teillastbetrieb, wieder der Darstellung in Fig. 2b.

Fig. 3b zeigt schematisch die effiziente Laststeuerung mit Vollmotoroption für die 2-Zylinder-Brennkraftmaschine aus Fig. 3a in einem ELS-Volllastbetrieb. Wie in Fig. 3b erkennbar ist, ist in diesem Fall wie in Fig. 2c der Frischluftpfad über den Wärmetauscher 6 deaktiviert. Weiter sind das erste Stellelement 11 und das dritte Stellelement 15 geschlossen. Damit stellt sich wiederum der Frischluftpfad aus Fig. 2c ein.

Fig. 3c zeigt schematisch die effiziente Laststeuerung mit Vollmotoroption für die 2-Zylinder-Brennkraftmaschine aus Fig. 3a in einem Vollmotorbetrieb. Im Gegensatz zu Fig. 3a und Fig. 3b ist nun der Frischluftpfad über das erste Stellelement 11 geöffnet. Das zweite Stellelement 14 ist geschlossen und das dritte Stellelement 15 ist geöffnet. Hieraus resultiert, dass die Frischluft nach dem Ansauggeräuschdämpfer 12 über das erste Stellelement 11 zu beiden Zylindern 2, 3 gelangt, wobei die Gaswechseleinlassseite und die Gaswechselauslassseite des ersten Zylinders vertauscht sind. Somit mutiert der Ansaugtrakt des ersten Zylinders 2 teilweise zu einem neuen Abgastrakt für den ersten Zylinder 2, der nun abgasführend mit dem Abgastrakt 5 des zweiten Zylinders 3 verbunden ist. Bei dem in Fig. 3c dargestellten Vollmotorbetrieb werden nun beide Zylinder 2, 3 im 4-Takt-Verfahren befeuert betrieben.

Mit dieser in Fig. 3c dargestellten Vollmotorbetriebsweise ist nun folgendes Verfahren bei hoher Last und/oder Leistung der Brennkraftmaschine 1 durchführbar:
- Öffnen des ersten Stellelementes 11 und Schließen des zweiten Stellelementes 14 und Öffnen des dritten Stellelementes 15 und befeuertes Betreiben des ersten und zweiten Zylinders 2, 3 in einem 4-Takt-Betrieb,
- Abführen der Abgase des ersten und zweiten Zylinders 2, 3 im Abgastrakt 5.

Fig. 4a zeigt schematisch einen Grundaufbau für die effiziente Laststeuerung mit einer Aufladung für eine 2-Zylinder-Brennkraftmaschine. Fig. 4a entspricht weitestgehend der Brennkraftmaschine 1 aus Fig. 2a, jedoch ist im Frischlufttrakt 4 in Strömungsrichtung der Frischluft vor dem Wärmetauscher 6 ein Verdichter 7 einer Strömungsmaschine 8 angeordnet. Bevorzugt ist die Strömungsmaschine 8 ein Abgasturbolader und in dem Abgastrakt 5, in Strömungsrichtung des Abgases vor dem Wärmetauscher 6, ist eine Turbine 9 des Abgasturboladers angeordnet. Zur lastpunktabhängigen Umgehung der Turbine 9 ist eine Wastegate 17 vorgesehen mit einem nicht bezifferten Absperrelement.

Fig. 4b zeigt schematisch die effiziente Laststeuerung mit Aufladung und Vollmotoroption für die 2-Zylinder-Brennkraftmaschine aus Fig. 4a. Fig. 4b unterscheidet sich von Fig. 4a dadurch, dass die Einlassseite 2' und die Auslassseite 2" des ersten Zylinders 2 wieder vertauscht sind und somit ein Vollmotorbetrieb möglich ist, d. h., dass beide Zylinder im 4-Takt-Betrieb befeuert betrieben werden. Der Grundaufbau und die Betriebsweise entsprechen denen in den Fig. 3a bis 3c.

Mit dem in den Fig. 4a und 4b dargestellten Grundaufbau lässt sich nun folgender Verfahrensschritt im Teillastbetrieb der Brennkraftmaschine 1 zusätzlich durchführen:
- Verdichten der Frischluft vor dem Aufheizen in dem Wärmetauscher 6 mit dem Verdichter 7.

Fig. 5a zeigt schematisch eine effiziente Laststeuerung mit Aufladung und Volllastoption für eine 6-Zylinder-Brennkraftmaschine. Es gilt wieder das zu den Fig. 4a und 4b ausgeführte, mit dem Unterschied, dass drei Zylinder zu einer ersten Zylindergruppe 2 und drei Zylinder zu einer zweiten Zylindergruppe 3 zusammengefasst sind.

Fig. 5b zeigt schematisch eine effiziente Laststeuerung mit Aufladung und Vollastoption in einem Teillastbetrieb für die 6-Zylinder-Brennkraftmaschine aus Fig. 5a.

Fig. 5c zeigt schematisch eine Laststeuerung mit Aufladung und Volllastoption in einem Vollmotorbetrieb für die 6-Zylinder-Brennkraftmaschine aus Fig. 5a.

Fig. 5d zeigt schematisch eine Laststeuerung mit Aufladung und Volllastoption für einen Volllastbetrieb für die 6-Zylinder-Brennkraftmaschine 1 aus Fig. 5a.

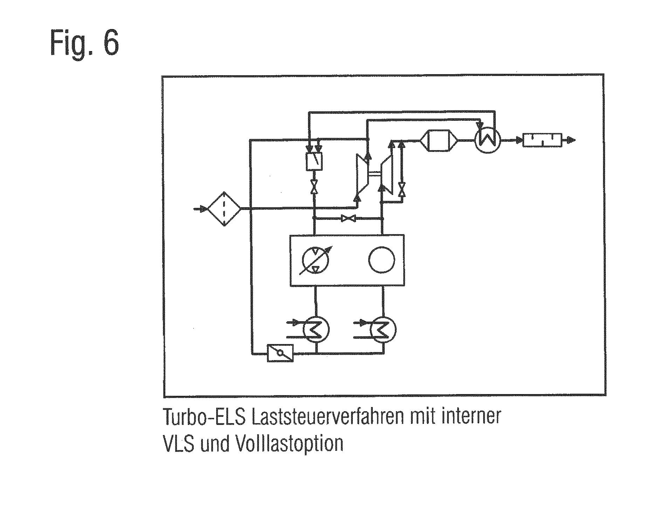

Fig. 6 zeigt nochmals schematisch eine effiziente Laststeuerung mit Aufladung und Volllastoption für einen Volllastbetrieb für eine 2-Zylinder-Brennkraftmaschine 1. Fig. 6 entspricht der Darstellung in Fig. 4b. Es gilt das zu Fig. 4b ausgeführte.

Tabelle 1 zeigt eine Auflistung für unterschiedliche Betriebsmodi des Turbo-ELS-Laststeuerverfahrens gem. dem Grundaufbau in Fig. 6. In der ersten Spalte ist die an die Brennkraftmaschine 1 angeforderte Last aufgetragen, die von niederer Teillast bis zum Vollmotorbetrieb reicht. In den folgenden Spalten sind die zugehörigen Betriebszustände des Wärmetauschers 6, des Frischlufttemperaturreglers 16, des zweiten Stellelementes 14, des ersten Zylinders 2, des dritten Stellelementes 15, des Wastegates 17 und dem ersten Stellelement 11 aufgetragen.

Betriebsmodi des Turbo-ELS Laststeuerverfahrens:

**Tabelle 1**

| Last | AAWT (6) | ATR (16) | ALKL (14) | VLS | AGKL (15) | WG (17) | DK (11) |
|---|---|---|---|---|---|---|---|
| niedere Teillast | aktiv | heiß | auf | Expansion | zu | auf | zu |
| mittlere Teillast | aktiv | heiß | auf | Expansion | zu | optimal | zu |
| mittlere Last | aktiv | heiß | auf | Expansion | zu | zu | zu |
| Hohe Last | passiv | kalt | auf | optimal | zu | optimal | zu |
| Boost / transient | passiv | kalt | auf | Kompression | zu | zu | zu |
| Vollmotor | passiv | passiv | zu | 4-Takt Verbr. | auf | optimal | auf |

Anhand der in Tabelle 1 dargestellten Schalt- und Betriebszustände, kann die erfindungsgemäße Brennkraftmaschine 1 über einen weiten Betriebsbereich kraftstoffsparend betrieben werden.

Mit dem Ausführungsbeispiel in Fig. 6 lässt sich nun ein Verfahren zum Betrieb einer Hubkolben-Brennkraftmaschine darstellen, welches gekennzeichnet ist durch folgende Verfahrensschritte bei kleiner bis höherer angeforderter Last und/oder Leistung:
- Befeuertes Betreiben des zweiten Zylinders 3,
- Abführen des Abgases des zweiten Zylinders 3 im Abgastrakt 5,
- Aufheizen der Frischluft in dem Wärmetauscher 6,
- Zuführen der aufgeheizten Frischluft dem ersten Zylinder 2,
- Expandieren und Abkühlen der Frischluft,
- Zuführen der expandierten Frischluft dem zweiten Zylinder 3.

Eine Effizienzsteigerung wird durch folgenden Verfahrensschritt erzielt:
- Betreiben des ersten Zylinders 2 in einem 2-Takt-Betrieb.

Ein erweiterter Betriebsbereich wird durch folgenden Verfahrensschritt erzielt:
- Verdichten der Frischluft vor dem Aufheizen in dem Wärmetauscher 6 mit dem Verdichter 7.

Mit dem folgenden Verfahrensschritt kann ein Turboloch eliminiert werden:
- Verdichten der Frischluft nach dem Aufheizen in dem Wärmetauscher 6 mit dem ersten Zylinder 2.

Weiter ist die Hubkolben-Brennkraftmaschine mit folgenden Verfahrensschritten bei mittlerer bis hoher angeforderter Last und/oder Leistung betreibbar:
- Befeuertes Betreiben des zweiten Zylinders 3,
- Abführen des Abgases des zweiten Zylinders 3 im Abgastrakt 5,
- Aufheizen der Frischluft in dem Wärmetauscher 6,
- Zuführen der aufgeheizten Frischluft dem ersten Zylinder 2,
- Expandieren und Abkühlen der Frischluft,
- Zuführen der expandierten Frischluft dem zweiten Zylinder 3,
- Bei noch größerer angeforderter Last und/oder Leistung Öffnen des ersten Stellelements 11 und Schließen des zweiten Stellelementes 14 und Öffnen des dritten Stellelementes 15 und Betreiben des ersten Zylinders 2 in einem befeuerten 4-Takt-Betrieb.

Ein nochmals erweiterter Betriebsbereich wird durch folgenden Verfahrensschritt erzielt:
- Verdichten der Frischluft vor dem Aufheizen in dem Wärmetauscher 6 mit dem Verdichter 7.

Durch den Expansionsprozess im Ansaugweg der mengengeregelten Brennkraftmaschine 1 in Verbindung mit dem vorgeschalteten Abgaswärmetauscher 6 und dem nachgeschalteten Frischluftkühler 10 lassen sich erfindungsgemäß deutliche Wirkungsgradverbesserungen und damit Kraftstoffverbrauchsvorteile erzielen. Das Verfahren lässt sich sowohl mit einer externen Expansions-/Kompressionsmaschine aber auch erfindungsgemäß brennkraftmaschinenintern, über zumindest einen erfindungsgemäß betriebenen Zylinder (VLS-Zylinder), realisieren. Kann die Expansionsmaschine auch zusätzlich als Kompressor betrieben werden, ergibt sich ein allgemeines Laststeuerverfahren, das einen großen Lastbereich der Brennkraftmaschine 1 bei hervorragendem Teillastkraftstoffverbrauch ermöglicht. In Verbindung mit z. B. einer Abgasturboaufladung lässt sich der Kraftstoffverbrauchsvorteil zu höheren Lasten hin erweitern und bei zusätzlicher Kompressorfunktion das Ansprechverhalten (Response) der Brennkraftmaschine 1 deutlich verbessern.

### Bezugszeichenliste:

- 1.: Brennkraftmaschine
- 2.: erster Zylinder
- 2': Gaswechsel-Einlassseite erster Zylinder
- 2": Gaswechsel-Auslassseite erster Zylinder
- 3.: zweiter Zylinder
- 4.: Frischlufttrakt
- 5.: Abgasstrakt
- 6.: Wärmetauscher
- 7.: Verdichter
- 8.: Strömungsmaschine
- 9.: Turbine
- 10.: Ladeluftkühler
- 11.: erstes Stellelement
- 12.: Ansauggeräuschdämpfer
- 13.: Abgasreinigungsanlage
- 14.: zweites Stellelement
- 15.: drittes Stellelement
- 16.: Frischlufttemperaturregelr
- 17.: Wastegate
- 18.: Schalldämpfer

### Abkürzungen:

- AGD: Ansauggeräuschdämpfer (12)
- ATL: Abgasturbolader (8)
- ATR: Ansaugtemperaturregler (16)
- ALKL: Ansaugluftklappe (14)
- VLS: Volumetrische Laststeuerung
- DK: Drosselklappe (11)
- ALK: Ansaugluftkühler (10)
- AGKL: Abgasklappe (15)
- WG: Wastegate (17)
- KAT: Katalysator (13)
- AAWT: Wärmetauscher (16)
- SD: Schalldämpfer (18)

## Patentansprüche

1. Mengengeregelte 4-Takt-Hubkolben-Brennkraftmaschine (1) mit einem ersten Zylinder (2), in dem ein erster, über ein erstes Pleuel mit einer Kurbelwelle in Wirkverbindung stehender Kolben hubbeweglich angeordnet ist und zumindest einem zweiten Zylinder (3), in dem ein zweiter, über ein zweites Pleuel mit der Kurbelwelle in Wirkverbindung stehender Kolben hubbeweglich angeordnet ist und mit einem Frischlufttrakt (4) für den zweiten Zylinder (3), in dem in Strömungsrichtung einer Frischluft vor einem Gaswechseleinlassventil des zweiten Zylinders (3) eine Expansions-/Kompressionsmaschine angeordnet ist und mit einem Abgasstrakt (5) für den zweiten Zylinder (3), wobei die Expansions-/Kompressionsmaschine der erste Zylinder (2) ist, **dadurch gekennzeichnet, dass** an den Abgastrakt (5) ein Wärmetauscher (6) anordenbar ist, und die Frischluft, bevor sie durch die Expansions-/Kompressionsmaschine strömt, in dem Wärmetauscher (6) von dem Abgas der Brennkraftmaschine (1) aufheizbar ist, wobei
- die Gaswechsel-Einlassseite (2') und die Gaswechsel-Auslassseite (2") des ersten Zylinders (2) vertauschbar sind und
- der Frischlufttrakt (4) zwischen dem Ansaugtemperaturregler (16) und der Gaswechsel-Auslassseite (2") mit einem zweiten Stellelement (14) trennbar ist und
- der Frischlufttrakt (4) über ein erstes Stellelement (11) mit der gaswechsel-Einlassseite des ersten und zweiten Zylinders (2, 3) verbindbar ist und
- die Gaswechsel-Auslassseite (2") des ersten Zylinders über ein drittes Stellelement (15) mit dem Abgastrakt (5) vor dem Wärmetauscher (6) verbindbar ist und
- der erste Zylinder (2) in einem Vier-Takt-Betrieb betreibbar ist.

2. Hubkolben-Brennkraftmaschine nach Patentanspruch 1,
**dadurch gekennzeichnet, dass** im Frischlufttrakt (4) nach dem Wärmetauscher (6) und vor der Expansions-/Kompressionsmaschine ein Frischluftwärmeregler (16) angeordnet ist.

3. Hubkolben-Brennkraftmaschine nach einem der Patentansprüche 1 oder 2, wobei für die Zylinder ein Ventiltrieb vorgesehen ist,
**dadurch gekennzeichnet, dass** der Ventiltrieb für den ersten und den zweiten Zylinder (2, 3) trennbar ist und der erste Zylinder (2) in einem 2-Takt-Betrieb betreibbar ist.

4. Hubkolben-Brennkraftmaschine nach einem der Patentansprüche 1 bis 3,
**dadurch gekennzeichnet, dass** der erste Zylinder (2) als ein Verdichter betreibbar ist.

5. Hubkolben-Brennkraftmaschine nach einem der Patentansprüche 1 bis 4 ,
**dadurch gekennzeichnet, dass** in Strömungsrichtung der Frischluft vor dem ersten und dem zweiten Zylinder (2, 3) in dem Frischlufttrakt (4) jeweils ein Ladeluftkühler (10) angeordnet ist.

6. Hubkolben-Brennkraftmaschine nach einem der Patentansprüche 1 bis 5,
**dadurch gekennzeichnet, dass** in dem Frischlufttrakt (4) in Strömungsrichtung der Frischluft vor dem Wärmetauscher (6) ein Verdichter (7) einer Strömungsmaschine (8) angeordnet ist.

7. Hubkolben-Brennkraftmaschine nach Patentanspruch 6,
**dadurch gekennzeichnet, dass** die Strömungsmaschine (8) ein Abgasturbolader und in dem Abgastrakt (5) in Strömungsrichtung eines Abgases vor dem Wärmetauscher (6) eine Turbine (9) des Abgasturboladers angeordnet ist.

8. Verfahren zum Betrieb einer Hubkolben-Brennkraftmaschine nach einem der Patentansprüche 1 bis 7,
**gekennzeichnet durch** folgende Verfahrensschritte bei kleiner bis mittlerer angeforderter Last und/oder Leistung:
- Befeuertes Betreiben des zweiten Zylinders (3),
- Abführen eines Abgases des zweiten Zylinders (3) im Abgastrakt (5),
- Ansaugen einer Frischluft mit dem ersten Zylinder (2),
- Expandieren der Frischluft,
- Zuführen der expandierten Frischluft dem zweiten Zylinder (3).

9. Verfahren zum Betrieb einer Hubkolben-Brennkraftmaschine nach Patentanspruch 8,
**gekennzeichnet durch** folgenden Verfahrensschritt:
- Aufheizen der Frischluft in dem Wärmetauscher (6) bevor die Frischluft dem ersten Zylinder (2) zugeführt wird.

10. Verfahren zum Betrieb einer Hubkolben-Brennkraftmaschine nach Patentanspruch 9,
**gekennzeichnet durch** folgenden Verfahrensschritt:
- Betreiben des ersten Zylinders (2) in einem 2-Takt-Betrieb.

11. Verfahren zum Betrieb einer Hubkolben-Brennkraftmaschine nach einem der Patentansprüche 8 bis 10,
**gekennzeichnet durch** folgenden Verfahrensschritt:
- Verdichten der Frischluft vor dem Aufheizen in dem Wärmetauscher (6) mit dem Verdichter (7).

12. Verfahren zum Betrieb einer Hubkolben-Brennkraftmaschine nach Patentanspruch 1,
**gekennzeichnet durch** folgende Verfahrensschritte bei mittlerer bis hoher angeforderter Last und/oder Leistung:
- Öffnen des ersten Stellelementes (11) und Schließen des zweiten Stellelementes (14) und Öffnen des dritten Stellelementes (15) und befeuertes Betreiben des ersten und zweiten Zylinders (2, 3) in einem 4-Takt-Betrieb,
- Abführen der Abgase des ersten und zweiten Zylinders (2, 3) im Abgastrakt (5).

13. Verfahren zum Betrieb einer Hubkolben-Brennkraftmaschine nach Patentanspruch 12,
**gekennzeichnet durch** folgenden Verfahrensschritt:
- Verdichten der Frischluft mit dem Verdichter (7) vor dem Zuführen zum ersten und zweiten Zylinder (2, 3).

14. Verfahren zum Betrieb einer Hubkolben-Brennkraftmaschine nach Patentanspruch 13,
**gekennzeichnet durch** folgenden Verfahrensschritt:
- Abkühlen der verdichteten der Frischluft mit dem Ladeluftkühler (10) vor dem Zuführen zum ersten und zweiten Zylinder (2, 3).

## Claims

1. A volume-controlled four-stroke reciprocating internal combustion engine (1) having a first cylinder (2) in which a first piston which is operatively connected to a crankshaft by a first connecting rod is arranged to be displaceable in a reciprocating motion, and at least one second cylinder (3) in which a second piston which is operatively connected to the crankshaft by a second connecting rod is arranged to be displaceable in a reciprocating motion, and having a fresh air tract (4) for the second cylinder (3), in which an expansion/compression machine is arranged upstream of a gas exchange inlet valve of the second cylinder (3) in the direction of flow of fresh air and having an exhaust tract (5) for the second cylinder (3), wherein the expansion/compression machine is the first cylinder (2), **characterised in that** a heat exchanger (6) can be arranged on the exhaust tract (5), and before the fresh air flows through the expansion/compression machine, it can be heated in the heat exchanger (6) by the exhaust gas of the internal combustion engine (1), wherein
- the gas exchange inlet side (2') and the gas exchange outlet side (2") of the first cylinder (2) are interchangeable and
- the fresh air tract (4) between the intake air temperature regulator (16) and the gas exchange outlet side (2") can be separated by a second actuating element (14) and
- the fresh air tract (4) can be connected by a first actuating element (11) to the gas exchange inlet side of the first and second cylinders (2, 3) and
- the gas exchange outlet side (2") of the first cylinder can be connected by a third actuating element (15) to the exhaust tract (5) upstream of the heat exchanger (6) and
- the first cylinder (2) is operable in a four-stroke operation.

2. A reciprocating internal combustion engine according to claim 1,
**characterised in that** a fresh air thermostat (16) is arranged in the fresh air tract (4) downstream of the heat exchanger (6) and upstream of the expansion/compression machine.

3. A reciprocating internal combustion engine according to either claim 1 or claim 2, wherein a valve train is provided for the cylinders,
**characterised in that** the valve train for the first and the second cylinders (2, 3) can be separated and the first cylinder (2) is operable in a two-stroke operation.

4. A reciprocating internal combustion engine according to any one of claims 1 to 3, **characterised in that** the first cylinder (2) is operable as a compressor.

5. A reciprocating internal combustion engine according to any one of claims 1 to 4,
**characterised in that** a respective charge air cooler (10) is arranged in the fresh air tract (4) upstream of the first and second cylinders (2, 3) in the direction of flow of the fresh air.

6. A reciprocating internal combustion engine according to any one of claims 1 to 5,
**characterised in that** a compressor (7) of a turbo-machine (8) is arranged upstream of the heat exchanger (6) in the fresh air tract (4) in the direction of flow of the fresh air.

7. A reciprocating internal combustion engine according to claim 6,
**characterised in that** the turbo-machine (8) is an exhaust gas turbocharger and a turbine (9) of the exhaust gas turbocharger is arranged upstream of the heat exchanger (6) in the exhaust tract (5) in the direction of flow of an exhaust gas.

8. A method for operating a reciprocating internal combustion engine according to any one of claims 1 to 7,
**characterised by** the following method steps at a small to medium required load and/or power:
- fired operation of the second cylinder (3),
- discharging an exhaust gas from the second cylinder (3) in the exhaust tract (5),
- drawing in fresh air by the first cylinder (2),
- expanding the fresh air,
- delivering the expanded fresh air to the second cylinder (3).

9. A method for operating a reciprocating internal combustion engine according to claim 8,
**characterised by** the following method step:
- heating the fresh air in the heat exchanger (6) before the fresh air is delivered to the first cylinder (2).

10. A method for operating a reciprocating internal combustion engine according to claim 9,
**characterised by** the following method step:
- operating the first cylinder (2) in a two-stroke operation.

11. A method for operating a reciprocating internal combustion engine according to any one of claims 8 to 10,
**characterised by** the following method step:
- compressing the fresh air by the compressor (7) before being heated in the heat exchanger (6).

12. A method for operating a reciprocating internal combustion engine according to claim 1,
**characterised by** the following method steps at a medium to high required load and/or power:
- opening the first actuating element (11) and closing the second actuating element (14) and opening the third actuating element (15) and performing a fired operation of the first and second cylinders (2, 3) in a four-stroke operation,
- discharging the exhaust gases from the first and second cylinders (2, 3) in the exhaust tract (5).

13. A method for operating a reciprocating internal combustion engine according to claim 12,
**characterised by** the following method step:
- compressing the fresh air by the compressor (7) before being delivered to the first and second cylinders (2, 3).

14. A method for operating a reciprocating internal combustion engine according to claim 13,
**characterised by** the following method step:
- cooling the compressed fresh air by the charge air cooler (10) before being delivered to the first and second cylinders (2, 3).

## Revendications

1. Moteur à combustion interne à pistons alternatifs à quatre temps à cylindrée variable (1) comprenant un premier cylindre (2) dans lequel est monté mobile en va-et-vient un premier piston en liaison fonctionnelle avec un vilebrequin par l'intermédiaire d'une première bielle, et au moins un second cylindre (3) dans lequel est monté mobile en va-et-vient un second piston en liaison fonctionnelle avec le vilebrequin par l'intermédiaire d'une seconde bielle, ainsi qu'une ligne d'air frais (4) pour le second cylindre (3) dans laquelle est monté, en amont d'une soupape d'admission d'échange de gaz du second cylindre (3), dans le sens de circulation de l'air frais, une machine de compression / détente, ainsi qu'une ligne de gaz d'échappement (5) pour le second cylindre (3), la machine de compression / détente étant constituée par le premier cylindre (2),
**caractérisé en ce qu'**
- un échangeur de chaleur (6) peut être monté sur la ligne de gaz d'échappement (5), et, l'air frais peut, avant de passer dans la machine de compression / détente être chauffé dans l'échangeur de chaleur (6) par les gaz d'échappement du moteur à combustion interne (1),
- le côté d'admission de l'échange de gaz (2') et le côté d'échappement de l'échange de gaz (2") du premier cylindre (2) peuvent être échangés,
- la ligne d'air frais (4) peut être subdivisée entre le régulateur de température d'aspiration (16) et le côté d'échappement de l'échange de gaz (2") par un second élément de réglage (14), et
- la ligne d'air frais (4) peut être reliée par l'intermédiaire d'un premier élément de réglage (11) avec le côté d'admission de l'échange de gaz du premier et du second cylindres (2, 3),
- le côté d'échappement de l'échange de gaz (2") du premier cylindre peut être relié par l'intermédiaire d'un troisième élément de réglage (15) avec la ligne de gaz d'échappement (5) en amont de l'échangeur de chaleur (6), et
- le premier cylindre (2) peut être actionné selon un mode de fonctionnement à quatre temps.

2. Moteur à combustion interne à pistons alternatifs conforme à la revendication 1,
**caractérisé en ce qu'**
un régulateur de chaleur de l'air frais (16) est monté dans la ligne d'air frais (4) en aval de l'échangeur de chaleur (6) et en amont de la machine de compression / détente.

3. Moteur à combustion interne à pistons alternatifs conforme à l'une des revendications 1 et 2,
dans lequel une commande de soupape est prévue pour les cylindres, **caractérisé en ce que**
la commande de soupape pour le premier et pour le second cylindre (2, 3) peut être subdivisée, et le premier cylindre (2) peut être actionné selon un mode de fonctionnement à deux temps.

4. Moteur à combustion interne à pistons alternatifs conforme à l'une des revendications 1 à 3,
caractérisé en en ce que
le premier cylindre (2) peut être actionné en tant que compresseur.

5. Moteur à combustion interne à pistons alternatifs conforme à l'une des revendications 1 à 4,
caractérisé en en ce qu'
un refroidisseur d'air de charge (10) est respectivement monté en amont du premier et du second cylindres (2, 3) dans le sens de circulation de l'air frais, dans la ligne de circulation de l'air frais (4).

6. Moteur à combustion interne à pistons alternatifs conforme à l'une des revendications 1 à 5,
caractérisé en en ce que
dans la ligne de circulation de l'air frais (4), un compresseur (7) d'une machine de circulation (8) est montée en amont de l'échangeur de chaleur (6) dans le sens de circulation de l'air frais.

7. Moteur à combustion interne à pistons alternatifs conforme à la revendication 6,
caractérisé en en ce que
le moteur de circulation (8) est un turbocompresseur de gaz d'échappement et, la turbine (9) du turbocompresseur des gaz d'échappement est montée en amont de l'échangeur de chaleur (6) dans le sens de circulation de gaz d'échappement (5), dans la ligne de circulation des gaz d'échappement.

8. Procédé de gestion d'un moteur à combustion interne à pistons alternatifs conforme à l'une des revendications 1 à 7,
**caractérisé par**
les étapes suivantes à demande de charge et/ou de puissance faible à moyenne consistant à :
- actionner le second cylindre (3) en l'alimentant,
- évacuer les gaz d'échappement du second cylindre (3) dans la ligne des gaz d'échappement (5),
- aspirer de l'air frais avec le premier cylindre (2),
- détendre l'air frais,
- transférer l'air frais détendu dans le second cylindre (3).

9. Procédé de gestion d'un moteur à combustion interne à pistons alternatifs conforme à la revendication 8,
**caractérisé par**
l'étape consistant à chauffer l'air frais dans l'échangeur de chaleur (6) avant qu'il ne soit transféré dans le premier cylindre (2).

10. Procédé de gestion d'un moteur à combustion interne à pistons alternatifs conforme à la revendication 9,
**caractérisé par**
l'étape consistant à actionner le premier cylindre (2) selon un mode de fonctionnement à deux temps.

11. Procédé de gestion d'un moteur à combustion interne à pistons alternatifs conforme à l'une des revendications 8 à 10 ,
**caractérisé par**
l'étape consistant à comprimer l'air frais avec le compresseur (7) avant son chauffage dans l'échangeur de chaleur (6).

12. Procédé de gestion d'un moteur à combustion interne à pistons alternatifs conforme à la revendication 1,
**caractérisé par**
les étapes de procédé suivantes à demande de charge et/ou de puissance moyenne à élevée consistant à :
- ouvrir le premier élément de réglage (11) et fermer le second élément de réglage (14) et ouvrir le troisième élément de réglage (15) et actionner en les alimentant le premier et le second cylindres (2, 3) selon un mode de fonctionnement à quatre temps,
- évacuer les gaz d'échappement du premier et du second cylindres (2, 3) dans la ligne des gaz d'échappement (5).

13. Procédé de gestion d'un moteur à combustion interne à pistons alternatifs conforme à la revendication 12,
**caractérisé par**
l'étape consistant à comprimer l'air frais avec le compresseur (7) avant son transfert dans le premier et dans le second cylindres (2, 3).

14. Procédé de gestion d'un moteur à combustion interne à pistons alternatifs conforme à la revendication 13,
**caractérisé par**
l'étape consistant à refroidir l'air frais comprimé avec le refroidisseur d'air de charge (10) avant son transfert dans le premier et dans le second cylindres (2, 3).
